(19) Europäisches Patentamt
European Patent Office
Office européen des brevets

(11) **EP 2 293 047 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
***G01N 21/90*** *(2006.01)*

(21) Anmeldenummer: **10172752.7**

(22) Anmeldetag: **13.08.2010**

(54) **Verfahren und Vorrichtung zur Bestimmung eines Massenanteils eines Wandabschnitts einer Kunststoffflasche**

Method and device for determining a mass proportion of a wall section of a plastic bottle

Procédé et dispositif de détermination d'une proportion de la masse d'une section de paroi d'une bouteille en plastique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **08.09.2009 DE 102009040626**

(43) Veröffentlichungstag der Anmeldung:
**09.03.2011 Patentblatt 2011/10**

(73) Patentinhaber: **Krones AG**
**93073 Neutraubling (DE)**

(72) Erfinder: **Niedermeier, Anton**
**93326, Offenstetten (DE)**

(74) Vertreter: **Grünecker Patent- und Rechtsanwälte PartG mbB**
**Leopoldstraße 4**
**80802 München (DE)**

(56) Entgegenhaltungen:
**WO-A1-01/65204          WO-A1-2007/031194**
**WO-A2-2008/027569**

**Beschreibung**

Die Erfindung betrifft ein Verfahren zur Bestimmung der Masse und/oder eines Massenanteils eines Wandabschnitts einer Kunststoffflasche, insbesondere eines Abschnitts im Bereich der Flaschenschulter und/oder des Flaschenhalses, sowie eine Vorrichtung zur Anwendung des erfindungsgemäßen Verfahrens.

Beim Streckblasen von Kunststoffflaschen, insbesondere PET-Flaschen, ist es aus Gründen der Qualitätssicherung und Prozesssteuerung wünschenswert, die Masse bzw. den Massenanteil einzelner Flaschenbereiche, wie beispielsweise des Flaschenbodens oder der Flaschenschulter, zu bestimmen. Bekanntermaßen können Flaschen zu diesem Zweck stichprobenartig aus dem Produktionsstrom ausgeschleust und zersägt werden, um die zu überprüfenden Abschnitte anschließend zu wiegen. Es wäre jedoch wünschenswert, die Masse einzelner Wandbereiche zerstörungsfrei und mit geringer Verzögerung im laufenden Produktstrom zu bestimmen.

Für eine derartige Überprüfung des Flaschenbodens ist es aus der DE 10 2005 044 206 A2 bekannt, in einem kontinuierlich im Neck-Handling durch eine Inspektionsvorrichtung laufenden Strom aus zu inspizierenden Flaschen jeweils den Flaschenboden mit Licht von unten zu durchleuchten und durch die Flaschenmündung Bild gebend darzustellen. Es ergeben sich dabei im Kamerabild den Wölbungen des Flaschenbodens entsprechende, charakteristische Hell-Dunkel-Strukturen, aus denen sich verschiedene Qualitätsmerkmale, insbesondere aber die Masse des Flaschenbodens im laufenden Prozess zerstörungsfrei bestimmen lassen.

Von besonderem Interesse ist jedoch auch der Schulter- bzw. Halsbereich der Flasche, da bei zu geringen Materialeinsatz in diesem Bereich der über dem abgefüllten Produkt vorhandene Stickstoff und gegebenenfalls Kohlendioxid durch die Flaschenwand in unerwünschtem Maße entweichen kann, wodurch die Produktqualität leidet.

Zwar ist es aus der WO 2008/027569 A2 bekannt, die Seitenwand einer rotationssymmetrischen Kunststoffflasche mit einer vertikalen Leuchtdiodenzeile in etwa radial und gerichtet zu durchstrahlen und die Lichttransmission nach beidseitigem Lichtdurchtritt durch die Flaschenwand mit einer entsprechenden Anzahl übereinander angeordneter Detektoren ortsaufgelöst zu bestimmen. Die Flaschenwand wird jedoch nur punktuell durchstrahlt, so dass die Wandbereiche in den Zwischenräumen des Bestrahlungsrasters nicht erfasst werden. Es kann jedoch sein, dass gerade die nicht erfassten Wandbereiche besonders problematisch sind. Das Bestrahlungsraster bedingt zudem, dass die Grenzen des Messbereichs nicht beliebig an die Flaschenform angepasst werden können. Außerdem muss aus der jeweiligen Transmission durch die Flaschenwand ein Absolutwert für die zugehörige Wandstärke ermittelt werden und aus dieser wiederum die Masse des zugeordneten Wandabschnitts. Dies ist jedoch mit vergleichsweise großen Fehlern behaftet.

Es ist daher Aufgabe der Erfindung, ein Verfahren bereitzustellen, das den Massenanteil eines vertikalen Abschnitts im Schulter- bzw. Halsbereich für verschiedene Flaschentypen vollständig, mit ausreichender Genauigkeit und zerstörungsfrei bestimmen kann.

Diese Aufgabe wird dadurch gelöst, dass das Verfahren folgenden Verfahrensschritte umfasst: a) Bestrahlen eines Bestrahlungsbereichs der Flaschenseitenwand mit Licht, insbesondere mit infrarotem oder ultraviolettem Licht, und Erfassen einer Lichtverteilung des die Flasche durchdringenden Lichts entlang eines Detektionsbereichs der Seitenwand auf der dem Bestrahlungsbereich abgewandten Seite der Flasche; b) Berechnen einer Massenverteilung der Flaschenseitenwand aus der Lichtverteilung; und c) Bestimmen des Massenanteils des zu bestimmenden Wandabschnitts an der Masse der Seitenwand anhand der Massenverteilung.

Durch die Relativmessung der Massenverteilung kann eine fehlerbehaftete Umrechnung einzelner Messpunkte der Lichtverteilung in absolute Massenwerte vermieden werden. Aus der Massenverteilung können die Massenanteile beliebig definierbarer Wandabschnitte bestimmt werden.

Erfindungsgemäß wird im Schritt c) der Massenanteil durch Integration der Massenverteilung über den Wandabschnitt und durch Verhältnisbildung mit dem Integral der Massenverteilung über den Detektionsbereich berechnet. Dadurch lässt sich eine für jede Flaschenform standardisierte Berechnungsmethode bereitstellen, so dass Messergebnisse auch in relativer Form miteinander verglichen werden können.

Vorzugsweise erstreckt sich der Bestrahlungsbereich und der Detektionsbereich vom Flaschenboden bis zum Mündungsbereich der Flasche. Da das Gewicht des Flaschenbodens und des Mündungsbereichs separat bestimmt werden können, ist die Angabe des Massenanteils des zu untersuchenden Wandabschnitts besonders aussagekräftig.

Vorzugsweise gibt die Massenverteilung die Verteilung der Masse entlang einer im Wesentlichen zur Hauptachse der Flasche parallelen Linie an. Dadurch eignet sich die Massenverteilung besonders gut zur Bestimmung der Masse bzw. des Massenanteils eines vollumfänglichen, rotationssymmetrischen Wandabschnitts.

Vorzugsweise wird die Massenverteilung auf Grundlage einer Kalibrierung berechnet, die einen Zusammenhang zwischen der Lichtverteilung und der Massenverteilung, insbesondere unter Berücksichtigung der Formgebung der Flasche, herstellt. Dadurch kann die Massenverteilung besonders genau bestimmt werden.

Vorzugsweise wird die Lichtverteilung auf Grundlage einer Kalibrierung gemessen, die die räumliche Intensitätsverteilung des Lichts im Bestrahlungsbereich berücksichtigt. Dadurch können Ungleichmäßigkeiten der Lichtquelle ausgeglichen werden.

Vorzugsweise wird die Lichtverteilung in mindestens einem Kamerabild erfasst. Dies ermöglicht eine gleichzeitige visuelle Kontrolle der Flasche und eine bezüglich der seitlichen Flaschenposition unkritische Datenerfassung.

Vorzugsweise wird der Detektionsbereich in einem Kamerabild abgebildet und kann durch Auswahl von Bildpunkten des Kamerabilds festgelegt werden. Dies ermöglicht eine besonders flexible Anpassung der Auswertung an verschiedene Flaschenformen.

Vorzugsweise ist der Bestrahlungsbereich im Wesentlichen streifenförmig und parallel zur Hauptachse der Flasche ausgerichtet. Dadurch können unerwünschte Lichtreflexe und Lichtbrechung an der Flasche begrenzt werden.

Vorzugsweise wird die Flasche während der Bestrahlung bodenfrei am Mündungsbereich gehalten. Eine Bestimmung des Bodengewichts durch Beleuchtung des Bodens kann dann unmittelbar vor oder nach der Bestimmung der Massenverteilung erfolgen.

Vorzugsweise wird die Flasche mit gepulstem Licht bestrahlt. Dies ermöglicht eine besonders genaue Triggerung der Bestrahlung und Detektion im laufenden Produktionsstrom.

Eine besonders günstige Ausführungsform umfasst ferner folgende Verfahrensschritte: d) Berechnen der Masse der Flaschenseitenwand aus der Differenz der bekannten Gesamtmasse der Flasche und der bekannten Massen des Flaschenbodens und des Mündungsbereichs; und e) Bestimmen der Masse des Wandabschnitts aus dem Massenanteil des Wandabschnitts und der Masse der Seitenwand. Dadurch kann die absolute Masse des zu untersuchenden Wandabschnitts auf einfache Weise und genau bestimmt werden.

Vorzugsweise ist die Flasche eine im Blas- bzw. Streckblasverfahren hergestellte Flasche, wobei die Gesamtmasse der Flasche im Wesentlichen der Masse des eingesetzten Flaschenrohlings entspricht und der Mündungsbereich der Flasche beim Blasen- bzw. Streckblasen nicht verformt wird, so dass die Gesamtmasse und die Masse des Mündungsbereichs in die Berechnung im Schritt a) jeweils als Konstante eingehen. Dadurch können unveränderliche Abschnitte der Flasche im Vorfeld durch stichprobenartiges Auswiegen mit hoher Präzision bestimmt werden.

Die technische Aufgabe wird ferner gelöst mit einer Vorrichtung zur Durchführung des erfindungsgemäßen Verfahrens, die umfasst: eine Lichtquelle zum Bestrahlen des Bestrahlungsbereichs; einen Detektor zum Erfassen der Lichtverteilung entlang des Detektionsbereichs; und eine Auswerteeinheit zum Berechnen des Massenanteils des zu inspizierenden Wandabschnitts gemäß Schritt b) und c). Die erfindungsgemäße Vorrichtung kann die Masse oder den Massenanteil des zu inspizierenden Wandabschnitts mit hoher Genauigkeit bestimmen.

Vorzugsweise umfasst die Vorrichtung ein Transportmittel, das einen kontinuierlichen Strom zu untersuchender Flaschen bodenfrei zwischen der Lichtquelle und dem Detektor hindurchführt. Damit lässt sich die Vorrichtung besonders effektiv mit einer Vorrichtung zur Bestimmung der Masse des Flaschenbodens koppeln.

Eine Ausführungsform der Erfindung ist in der Zeichnung dargestellt. Es zeigen:

Fig. 1 ein Kamerabild einer durchleuchteten Flasche;

Fig. 2 eine schematische Teilansicht einer Messeinrichtung zur Durchführung des erfindungsgemäßen Verfahrens; und

Fig. 3 eine Massenverteilung der Seitenwand.

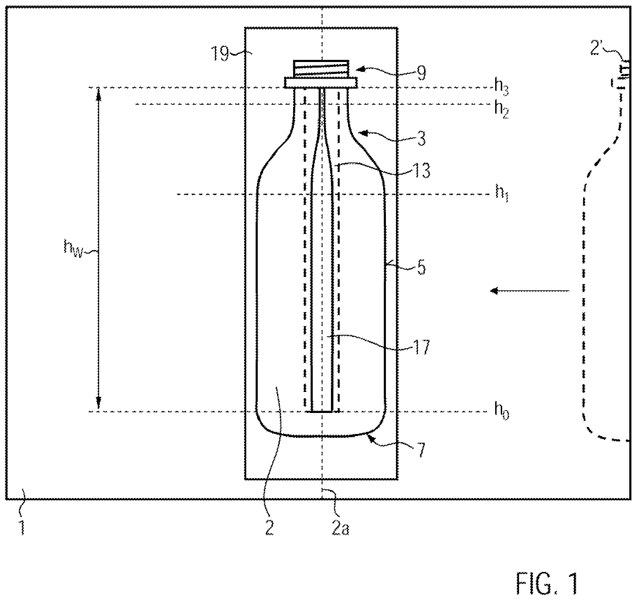

Fig. 1 zeigt ein Kamerabild 1 einer zu untersuchenden, im Wesentlichen rotationssymmetrischen Flasche 2 mit einem vollumfänglichen Wandabschnitt 3, der insbesondere dem Bereich der Flaschenschulter und/oder des Flaschenhalses entsprechen kann, dessen Masse $m_S$ bzw. dessen Massenanteil $\omega_S$ an der Flaschenwand 5 zu bestimmen ist. Der Wandabschnitt 3 ist ein Abschnitt der seitlichen Flaschenwand 5, die sich zwischen dem Flaschenboden 7 und dem Mündungsbereich 9 der Flasche 2 erstreckt.

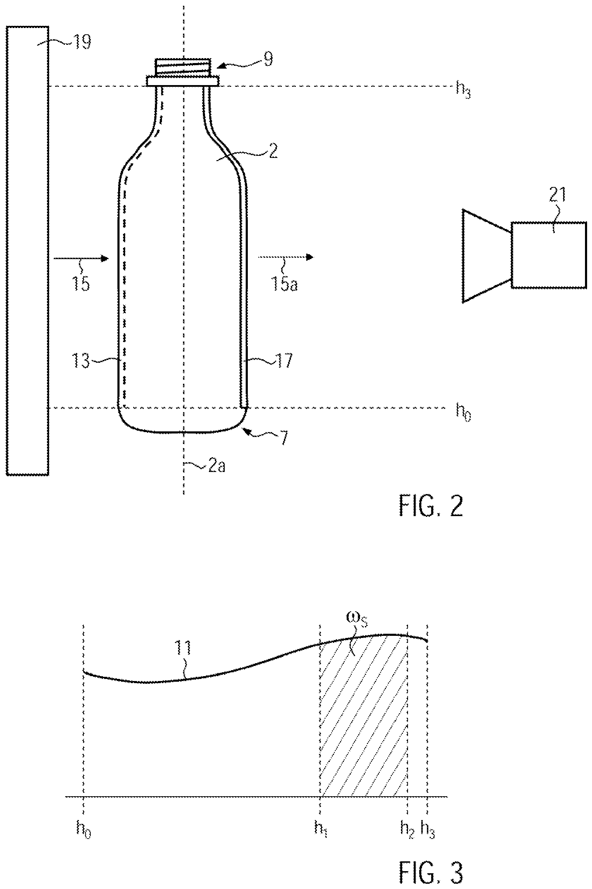

Wie ferner Fig. 2 und 3 verdeutlichen, beruht die Erfindung auf der Bestimmung einer relativen Massenverteilung 11 der Flaschenwand 5, insbesondere zwischen dem Boden 7 und dem Mündungsbereich 9. Hierzu bestrahlt man einen Bestrahlungsbereich 13 der Flaschenwand 5 zunächst seitlich mit Licht 15, insbesondere mit infrarotem oder ultraviolettem Licht, und misst die Verteilung 16 (nicht dargestellt) des die Flaschenwand 5 in einem entgegen gesetzten Detektionsbereich 17 durchdringenden Lichtanteils 15a.

Anschließend berechnet man aus der Verteilung 16 der Lichttransmission 15a die Massenverteilung 11 vorzugsweise unter Einbeziehung einer Kalibrierung anhand im Vorfeld gewonnener Vergleichsdaten, die einen direkten Zusammenhang zwischen der Lichttransmission 15a durch einen bestimmten Abschnitt der Flaschenwand 5 und dessen Masse bzw. Massenanteil an der Flaschenwand 5 herstellt. Hierbei ist es zweckmäßig, jeden zu untersuchenden Flaschentyp separat zu kalibrieren, so dass der Einfluss der Flaschenform auf die gemessene Lichtverteilung 16 beispielsweise durch Lichtreflexion und/oder Lichtbrechung bzw. auf die berechnete Massenverteilung 11 berücksichtigt wird.

Es genügt, die Massenverteilung 11 in relativer Form zu ermitteln. Folglich müssen die Messwerte der Strahlungstransmission 15a, z. B. Graustufen einzelner Pixel, nicht einzeln in eine absolute Masse umgerechnet werden.

Im Folgenden ist eine Ausführungsform der Erfindung zur Bestimmung der (absoluten) Masse $m_S$ des Wandabschnitts 3 beschrieben. Es kann jedoch ausreichend sein, nur dessen nachfolgend definierten (relativen) Massenanteil $\omega_S$ zu bestimmen. Die Verfahrensschritte zur Bestimmung der jeweiligen (absoluten) Massen müssen dann nicht ausgeführt werden.

Die Gesamtmasse $m_G$ der im Blas- bzw. Streckblasverfahren hergestellten Flasche 2 entspricht der des eingesetzten Flaschenrohlings (nicht gezeigt) und kann somit durch dessen stichprobenartiges Auswiegen bestimmt werden. Weiterhin kann die Masse $m_M$ des Mündungsbereichs 9, der sich beim Streckblasen allgemein nicht verformt, durch Abtrennen und separates Auswiegen des Mündungsbereichs 9 im Vorfeld bestimmt werden. Die Massen $m_G$ und $m_M$ können bei der Durchführung des erfindungsgemäßen Verfahrens somit als bekannt vorausgesetzt werden und gehen jeweils als eine für einen bestimmten Flaschentyp charakteristische Konstante in das Verfahren ein.

Die Masse $m_B$ des Flaschenbodens kann für jede Flasche separat im zulaufenden bzw. ablaufenden Produktstrom bestimmt werden, beispielsweise mit dem aus der DE 10 2005 044 206 A2 bekannten Verfahren, und kann somit bei der Durchführung des erfindungsgemäßen Verfahrens ebenfalls als bekannt vorausgesetzt werden. Die Masse $m_B$ geht als eine für jede einzelne Flasche charakteristische Konstante in das Verfahren ein.

Die Masse $m_W$ der Flaschenwand 5 zwischen Boden 7 und Mündungsbereich 9 lässt sich daher wie folgt bestimmen:

$$m_W = m_G - (m_M + m_B).$$

Im Ausführungsbeispiel wird die in Figur 3 schematisch dargestellte relative Massenverteilung 11 zwischen dem Boden 7 und dem Mündungsbereich 9 bestimmt, wobei das Integral der Massenverteilung 11 über die gesamte Höhe $h_w$ (von $h_0$ bis $h_3$) der Flaschenwand 5 der Masse $m_W$ der Flaschenwand 5 bzw. einem Massenanteil $\omega_W$ gleich 1 entspricht. Definiert man den zu untersuchenden Wandbereich 3 als einen Bereich zwischen einer unteren vertikalen Position $h_1$ und eine oberen vertikalen Position $h_2$, so ergibt das Integral der Massenverteilung 11 von $h_1$ bis $h_2$ den Massenanteil $\omega_S$ des zu untersuchenden Bereichs 3 der Flaschenwand 5, in Figur 3 als schraffierte Fläche unter der Massenverteilung 11 dargestellt. Die absolute Masse $m_S$ des zu untersuchenden Bereichs 3 ergibt sich dann wie folgt:

$$m_S = m_W * \omega_S / \omega_W.$$

Hierbei kann der Wandbereich 3 ein beliebiger Bereich der Flaschenwand 5 sein, also beispielsweise bis zum Mündungsbereich 9 reichen.

Der Vorteil dieses Verfahrens liegt zum Einen darin, dass die absolute Masse $m_W$ der Flaschenwand 5 einfach und genau bestimmt werden kann und als Konstante in das Verfahren eingeht. Zum Anderen kann die Massenverteilung 11 in relativer Form bestimmt und eine fehlerbehaftete Umrechnung einzelner Transmissionswerte in absolute Massenwerte vermieden werden.

Fig. 1 und 2 verdeutlichen eine zur Durchführung des Verfahrens geeignete Bestrahlungsanordnung. Demnach erstreckt sich zwischen dem Flaschenboden 7 und dem Mündungsbereich 9 auf einer ersten, einer Lichtquelle 19 zugewandten Seite der Flasche 2 der Bestrahlungsbereich 13 und auf der gegenüberliegenden, einem vorzugsweise Bild gebenden Lichtdetektor 21 zugewandten Seite der Detektionsbereich 17. Das heißt, der Lichteintritt bzw. -austritt an der Flaschenwand 5 erfolgt vorzugsweise jeweils über deren gesamte Höhe $h_w$.

Die Breite des Bestrahlungsbereichs 13 und/oder des Detektionsbereichs 17 bzw. dessen Projektion im Kamerabild 1 kann nach Bedarf angepasst werden. So kann der Bestrahlungsbereich 13, dessen Umrisse in Fig. 1 und 2 gestrichelt angedeutet sind, streifenförmig sein. Die Flasche 2 könnte jedoch auch halbseitig bestrahlt werden.

Die Flasche 2 wird als Teil eines kontinuierlichen Produktstroms bodenfrei im Neck-Handling, beispielsweise von einem rotierenden Transportmittel (nicht gezeigt) zwischen der Lichtquelle 19 und dem Detektor 21 hindurch geführt, um eine ungehinderte, vor oder nach geschaltete Inspektion des Flaschenbodens 7 zu ermöglichen.

Die Lichtquelle 19 emittiert vorzugsweise gepulstes Licht 15, das von der Flaschenwand 5 so stark absorbiert wird, dass unterschiedliche Schichtdicken bzw. Massen der Flaschenwand 5 voneinander unterscheidbare Messsignale am Detektor 21 erzeugen. Das Licht 15 liegt vorzugsweise innerhalb eines definierten Spektralbereichs, vorzugsweise im Infraroten, insbesondere im Spektralbereich von 1,6 bis 5 $\mu$m, oder im Ultravioletten, insbesondere im Spektralbereich von 300 bis 320 nm. Es wäre aber prinzipiell jede elektromagnetische Strahlung verwendbar, die in der Flaschenwand 5 in geeignetem Umfang absorbiert wird, wie beispielsweise weiche Röntgenstrahlung.

Die Lichtquelle 19 kann als Flächenstrahler ausgebildet sein, insbesondere als Leuchtschirm mit Leuchtdioden, der mindestens so hoch ist wie die Flaschenwand 5, so dass das abgestrahlte Licht 15 die Flaschenwand 5 zwischen Boden 7 und Mündungsbereich 9 zumindest in einem umfänglichen Teilbereich abdeckt. Für eine möglichst gerichtete Bestrahlung der Flaschenwand 5 kann der bestrahlungsseitige Strahlengang entsprechend lang ausgelegt werden. Ebenso ist es möglich, divergente Strahlanteile durch Schlitzblenden im bestrahlungsseitigen Strahlengang auszublenden. Die Hauptstrahlungsrichtung der Lichtquelle 19 ist vorzugsweise senkrecht zur Flaschenhauptachse 2a.

Eine gerichtete Bestrahlung ist wünschenswert, um einen möglichst großen Strahlungsanteil unter kleinen Eintritts- und Austrittswinkeln durch die Flasche 2 zu leiten, um Reflexionen und Brechung an den Oberflächen der Flaschenwand 5 zu minimieren. Es kann jedoch je nach Anwendung auch vorteilhaft sein, die Flaschenwand 5 diffus zu bestrahlen.

Die Intensitätsverteilung des im Bestrahlungsbereich 13 einfallenden Lichts 15 ist möglichst homogen. Zu diesem Zweck kann die Abstrahlcharakteristik der Lichtquelle 19 speziell angepasst werden. Es ist jedoch in jedem Fall vorteilhaft, die räumliche Helligkeitsverteilung des eingestrahlten Lichts 15 im Bestrahlungsbereich 13 durch eine Bestrahlungskalibrierung zu ermitteln und bei der Berechnung der Massenverteilung 11 zu berücksichtigen.

Der Detektor 21 ist vorzugsweise eine Kamera. Die Breite des Detektionsbereichs 17 kann dann durch Zuordnung eines geeigneten Bereichs bzw. der zugehörigen Pixel im Kamerabild 1 nach Bedarf vorgegeben werden. Wie in Fig. 1 angedeutet, könnten die seitlichen Begrenzungslinien des Detektionsbereichs 17 näherungsweise der Flaschenform folgen, so dass jeweils ein einheitlicher umfänglicher Bereich der Flaschenwand 5 erfasst wird. Die Breite bzw. die seitlichen Begrenzungslinien des Detektionsbereichs 17 könnte aber auch an spezielle Oberflächenstrukturen wie Griffmulden, Wülste usw. angepasst werden. Auch die Lage des zu untersuchenden Wandabschnitts 3, also die Höhen $h_1$ und $h_2$, könnten komfortabel im Kamerabild 1 eingestellt und kontrolliert werden. Es ist jedoch auch denkbar, den Detektor 21 lediglich als Detektorzeile auszubilden.

Vorzugsweise wird die Lichtverteilung 16 entlang einer im Wesentlichen zur Hauptachse 2a der Flasche 2 parallelen Linie erfasst bzw. die Massenverteilung 11 in entsprechender Ausrichtung berechnet. Dies erleichtert die Auswertung bei im Wesentlichen rotationssymmetrischen Flaschen. Je nach Flaschenform kann der Detektionsbereich 17 aber auch einer an unsymmetrische Strukturen angepassten Linie folgen bzw. die Berechnung der Massenverteilung 11 entsprechend angepasst werden.

Für eine möglichst gerichtete Detektion kann der detektionsseitige Strahlengang entsprechend lang ausgelegt werden, beispielsweise unter Verwendung eines Kameraobjektivs mit langer Brennweite.

Da sich die Flasche 2 während der Inspektion in einem kontinuierlichen Produktstrom bewegt, wie in Fig. 1 durch eine weitere gestrichelt dargestellte Flasche 2' und den zugehörigen Pfeil angedeutet, ist der Zeitpunkt der Beleuchtung, beispielsweise in Form eines Lichtblitzes, und/oder der Zeitpunkt der Detektion bzw. Bildaufnahme mit der Flaschenbewegung koordiniert. Hierzu ist eine (nicht dargestellte) Steuereinheit vorgesehen. Ferner ist eine (nicht dargestellte) Auswerteeinheit zum Auswerten der Lichttransmission und Berechnen der Masse $m_S$ und/oder des Massenanteils $\omega_S$ vorgesehen.

**Patentansprüche**

1. Verfahren zur Bestimmung eines Massenanteils ($\omega_S$) eines Wandabschnitts (3) einer Seitenwand (5) einer Kunststoffflasche (2), insbesondere eines Abschnitts im Bereich der Flaschenschulter und/oder des Flaschenhalses, mit folgenden Verfahrensschritten:

   a) Bestrahlen eines Bestrahlungsbereichs (13) der Seitenwand (5) mit Licht (15), insbesondere mit infrarotem oder ultraviolettem Licht, und Erfassen einer Lichtverteilung (16) des die Flasche (2) durchdringenden Lichts (15a) entlang eines Detektionsbereichs (17) der Seitenwand (5) auf der dem Bestrahlungsbereich (13) abgewandten Seite der Flasche (2);
   b) Berechnen einer Massenverteilung (11) der Seitenwand (5) aus der Lichtverteilung (16); und
   c) Bestimmen des Massenanteils ($\omega_S$) des Wandabschnitts (3) an der Masse ($m_W$) der Seitenwand (5) anhand der Massenverteilung (11), wobei der Massenanteil ($\omega_S$) durch Integration der Massenverteilung (11) über den Wandabschnitt (3) und durch Verhältnisbildung mit dem Integral der Massenverteilung (11) über den Detektionsbereich (17) berechnet wird.

2. Verfahren nach Anspruch 1, wobei sich der Bestrahlungsbereich (13) und der Detektionsbereich (17) vom Flaschenboden (7) bis zum Mündungsbereich (9) der Flasche (2) erstrecken.

3. Verfahren nach mindestens einem der vorigen Ansprüche, wobei die Massenverteilung (11) die Verteilung der Masse entlang einer im Wesentlichen zur Hauptachse (2a) der Flasche (2) parallelen Linie angibt.

4. Verfahren nach mindestens einem der vorigen Ansprüche, wobei die Massenverteilung (11) auf Grundlage einer Kalibrierung berechnet wird, die einen Zusammenhang zwischen der Lichtverteilung (16) und der Massenverteilung (11), insbesondere unter Berücksichtigung der Formgebung der Flasche (2), herstellt.

5. Verfahren nach mindestens einem der vorigen Ansprüche, wobei die Lichtverteilung (16) auf Grundlage einer Kalibrierung gemessen wird, die die räumliche Intensitätsverteilung des Lichts (15) im Bestrahlungsbereich (13) berücksichtigt.

6. Verfahren nach mindestens einem der vorigen Ansprüche, wobei die Lichtverteilung (16) in mindestens einem Kamerabild (1) erfasst wird.

7. Verfahren nach mindestens einem der vorigen Ansprüche, wobei der Detektionsbereich (17) in einem Kamerabild (1) abgebildet wird und durch Auswahl von Bildpunkten des Kamerabilds (1) festgelegt werden kann.

8. Verfahren nach mindestens einem der vorigen Ansprüche, wobei der Bestrahlungsbereich (13) im Wesentlichen streifenförmig ist und parallel zur Hauptachse (2a) der Flasche (2) ausgerichtet ist.

9. Verfahren nach mindestens einem der vorigen Ansprüche, wobei die Flasche (2) während der Bestrahlung bodenfrei am Mündungsbereich (9) gehalten wird.

10. Verfahren nach mindestens einem der vorigen Ansprüche, wobei die Flasche (2) mit gepulstem Licht (15) bestrahlt wird.

11. Verfahren nach mindestens einem der vorigen Ansprüche, ferner umfassend folgende Verfahrensschritte:

d) Berechnen der Masse ($m_W$) der Seitenwand (5) aus der Differenz der bekannten Gesamtmasse ($m_G$) der Flasche (2) und der bekannten Massen ($m_B$, $m_M$) des Flaschenbodens (7) und des Mündungsbereichs (9);
e) Bestimmen der Masse ($m_S$) des Wandabschnitts (3) aus dem Massenanteil ($\omega_S$) des Wandabschnitts (3) und der Masse ($m_W$) der Seitenwand (5).

12. Verfahren nach mindestens einem der vorigen Ansprüche, wobei die Flasche (2) eine im Blas- bzw. Streckblasverfahren hergestellte Flasche ist, und wobei die Gesamtmasse ($m_G$) der Flasche (2) im Wesentlichen der Masse des eingesetzten Flaschenrohlings entspricht und der Mündungsbereich (9) der Flasche (2) beim Blasen- bzw. Streckblasen nicht verformt wird, so dass die Gesamtmasse ($m_G$) und die Masse ($m_M$) des Mündungsbereichs (9) in die Berechnung im Schritt a) jeweils als Konstante eingehen.

13. Vorrichtung zur Durchführung des Verfahrens nach mindestens einem der vorigen Ansprüche, mit:

- einer Lichtquelle (19) zum Bestrahlen des Bestrahlungsbereichs (13);
- einem Detektor (21) zum Erfassen der Lichtverteilung (16) entlang des Detektionsbereichs (17); und
- einer Auswerteeinheit zum Berechnen des Massenanteils ($\omega_S$) des Wandabschnitts (3) gemäß den Verfahrensschritten b) und c).

14. Vorrichtung nach Anspruch 13, ferner umfassend ein Transportmittel, das einen kontinuierlichen Strom zu untersuchender Flaschen (2) bodenfrei zwischen der Lichtquelle (19) und dem Detektor (21) hindurchführt.

**Claims**

1. Method of determining a mass proportion ($\omega_S$) of a wall section (3) of a plastic bottle (2), in particular a section in the region of the bottle shoulder and / or of the bottle neck, with the following steps in the method:

a) irradiation of an irradiation region (13) of the bottle side wall (5) with light (15), in particular with infrared or ultraviolet light, and the acquisition of a light distribution (16) of the light (15a) penetrating the bottle (2) along a detection region (17) of the side wall (5) on the side of the bottle (2) facing away from the irradiation region (13);
b) calculation of a mass distribution (11) of the bottle side wall (5) from the light distribution (16);
c) determination of the mass proportion ($\omega_S$) of the mass ($m_W$) of the side wall (5) based on the mass distribution (11), wherein the mass proportion ($\omega_S$) is calculated by integration of the mass distribution (11) over the wall section (3) and by forming a relationship with the integral of the mass distribution (11) over the detection area (17).

2. Method according to Claim 1, wherein the irradiation region (13) and the detection region (17) extend from the bottle bottom (7) to the mouth region (9) of the bottle (2).

3. Method according to at least one of the previous claims, wherein the mass distribution (11) states the distribution of the mass along a line essentially parallel to the principal axis (2a) of the bottle (2).

4. Method according to at least one of the previous claims, wherein the mass distribution (11) is calculated based on a calibration which produces a relationship between the light distribution (16) and the mass distribution (11), in particular taking into consideration the contouring of the bottle (2).

5. Method according to at least one of the previous claims, wherein the light distribution (16) is measured based on a calibration which takes into account the spatial intensity distribution of the light (15) in the irradiation region (13).

6. Method according to at least one of the previous claims, wherein the light distribution (16) is acquired in at least one camera image (1).

7. Method according to at least one of the previous claims, wherein the detection region (17) is reproduced in a camera image (1) and can be determined by the selection of pixels in the camera image (1).

8. Method according to at least one of the previous claims, wherein the irradiation region (13) is essentially strip-shaped and oriented parallel to the principal axis (2a) of the bottle (2).

9. Method according to at least one of the previous claims, wherein the bottle (2) is held off-floor at the mouth region (9) during the irradiation.

10. Method according to at least one of the previous claims, wherein the bottle (2) is irradiated with pulsed light (15).

11. Method according to at least one of the previous claims, further comprising the following steps in the method:

d) calculation of the mass ($m_W$) of the bottle side wall (5) from the difference between the known total mass ($m_G$) of the bottle (2) and the known masses ($m_B$, $m_M$) of the bottle bottom (7) and of the mouth region (9);
e) determination of the mass ($m_S$) of the wall section (3) from the mass proportion ($\omega_S$) of the wall section (3) and the mass ($m_W$) of the side wall (5).

12. Method according to at least one of the previous claims, wherein the bottle (2) is a bottle manufactured using the blowing or stretch blowing method, wherein the total mass ($m_G$) of the bottle (2) essentially corresponds to the mass of the bottle preform used and the mouth region (9) of the bottle (2) during blowing or stretch blowing is not distorted so that the total mass ($m_G$) and the mass ($m_M$) of the mouth region (9) each enter the calculation in step a) as constants.

13. Device for the implementation of the method according to at least one of the previous claims with:

- a light source (19) for the irradiation of the irradiation region (13);
- a detector (21) for the acquisition of the light distribution (16) along the detection region (17); and
- an evaluation unit for the calculation of the mass proportion ($\omega_S$) of the wall section (3) according to method steps b) and c).

14. Device according to Claim 13, further comprising a means of transport, which feeds a continuous flow of bottles (2) to be examined off-floor between the light source (19) and the detector (21).

**Revendications**

1. Procédé pour déterminer une proportion de masse ($\omega_S$) d'un secteur de paroi (3) d'une paroi latérale (5) d'une bouteille plastique (2), notamment d'un secteur dans la zone de l'épaule de bouteille et/ou du col de bouteille, comprenant les étapes de procédé suivantes :

a) l'irradiation d'une zone d'irradiation (13) de la paroi latérale (5) avec de la lumière (15), notamment avec de la lumière infrarouge ou ultraviolette, et le relevé d'une répartition de lumière (16) de la lumière (15a) traversant la bouteille (2), le long d'une zone de détection (17) de la paroi latérale (5) sur le côté de la bouteille (2), qui est opposé à la zone d'irradiation (13) ;
b) le calcul d'une répartition de masse (11) de la paroi latérale (5) à partir de la répartition de lumière (16) ; et
c) la détermination de la proportion de masse ($\omega_S$) du secteur de paroi (3), de la masse ($m_W$) de la paroi latérale (5), au regard de la répartition de masse (11), la proportion de masse ($\omega_S$) étant calculée par intégration de la répartition de masse (11) sur le secteur de paroi (3), et par formation d'un rapport avec l'intégrale de la répartition de masse (11) sur la zone de détection (17).

2. Procédé selon la revendication 1, d'après lequel la zone d'irradiation (13) et la zone de détection (17) s'étendent du fond de bouteille (7) jusqu'à la zone de goulot (9) de la bouteille (2).

3. Procédé selon l'une au moins des revendications précédentes, d'après lequel la répartition de masse (11) indique la répartition de la masse le long d'une ligne sensiblement parallèle à l'axe principal (2a) de la bouteille (2).

4. Procédé selon l'une au moins des revendications précédentes, d'après lequel la répartition de masse (11) est calculée sur la base d'un calibrage, qui établit une relation entre la répartition de lumière (16) et la répartition de masse (11), notamment en tenant compte de la forme de la bouteille (2).

5. Procédé selon l'une au moins des revendications précédentes, d'après lequel la répartition de lumière (16) est mesurée sur la base d'un calibrage, qui prend en considération la répartition spatiale d'intensité de la lumière (15) dans la zone d'irradiation (13).

**6.** Procédé selon l'une au moins des revendications précédentes, d'après lequel la répartition de lumière (16) est relevée dans au moins une image de caméra (1).

**7.** Procédé selon l'une au moins des revendications précédentes, d'après lequel la zone de détection (17) est reproduite dans une image de caméra (1) et peut être fixée par sélection de points d'image de l'image de caméra (1).

**8.** Procédé selon l'une au moins des revendications précédentes, d'après lequel la zone d'irradiation (13) est sensiblement en forme de bande et est orientée parallèlement à l'axe principal (2a) de la bouteille (2).

**9.** Procédé selon l'une au moins des revendications précédentes, d'après lequel pendant l'irradiation, la bouteille (2) est maintenue au niveau de la zone de goulot (9), en laissant libre le fond de bouteille.

**10.** Procédé selon l'une au moins des revendications précédentes, d'après lequel la bouteille (2) est irradiée par de la lumière pulsée (15).

**11.** Procédé selon l'une au moins des revendications précédentes, comprenant, par ailleurs, les étapes de procédé suivantes :

d) le calcul de la masse ($m_w$) de la paroi latérale (5) à partir de la différence de la masse totale ($m_G$) de la bouteille (2) et des masses connues ($m_B$, $m_M$) du fond de bouteille (7) et de la zone de goulot (9) ;

e) la détermination de la masse ($m_S$) du secteur de paroi (3) à partir de la proportion de masse ($\omega_S$) du secteur de paroi (3) et de la masse (mw) de la paroi latérale (5).

**12.** Procédé selon l'une au moins des revendications précédentes, d'après lequel la bouteille (2) est une bouteille fabriquée selon un processus de moulage par soufflage ou de moulage par étirage-soufflage, et d'après lequel la masse totale ($m_G$) de la bouteille (2) correspond sensiblement à la masse de l'ébauche de bouteille mise en oeuvre, et la zone de goulot (9) de la bouteille (2) n'est pas déformée lors du soufflage ou de l'étirage-soufflage, de sorte que la masse totale ($m_G$) et la masse ($m_M$) de la zone de goulot (9) entrent respectivement en tant que constante dans le calcul de l'étape a).

**13.** Installation pour la mise en oeuvre du procédé selon l'une au moins des revendications précédentes, comprenant :

- une source de lumière (19) pour irradier la zone d'irradiation (13) ;

- un détecteur 21) pour relever la répartition de lumière (16) le long de la zone de détection (17) ; et
- une unité de traitement de données pour calculer la proportion de masse ($\omega_S$) du secteur de paroi (3) conformément aux étapes de procédé b) et c).

**14.** Installation selon la revendication 13, comprenant, par ailleurs, un moyen de transport qui fait passer entre la source de lumière (19) et le détecteur (21), un flux continu de bouteilles (2) à inspecter, en laissant libre leur fond.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005044206 A2
- WO 2008027569 A2